# EUROPEAN PATENT APPLICATION

(11) **EP 4 794 152 A1**
(43) Date of publication of application: **19.08.2026**
(21) Application number: 24776475.6
(22) Date of filing: 06.08.2024
(51) Int. Cl.: H02J 1/00, B60L 1/00, H01M 4/00, H02J 7/35, H02J 7/50, H02J 7/90

(54) **CHARGING CONTROL METHOD AND APPARATUS, AND PHOTOVOLTAIC CHARGING SYSTEM, VEHICLE-MOUNTED TERMINAL AND VEHICLE**

(30) Priority: 31.07.2024 CN 202411039402
(71) Applicant: Trinaway Jiangsu Co., Ltd., Changzhou, Jiangsu 213031 (CN)
(72) Inventor: GENG, Yuhang, Changzhou, Jiangsu 213031 (CN); JIAO, Haijun, Changzhou, Jiangsu 213031 (CN); GAO, Xiaoyan, Changzhou, Jiangsu 213031 (CN); HE, Wei, Changzhou, Jiangsu 213031 (CN)
(74) Representative: Arnold & Siedsma
(86) International application number: PCT/CN2024/110167
(87) International publication number: WO 2026/025521

(57) **Abstract**

The present application relates to a charging control method and apparatus, a photovoltaic charging system, a vehicle-mounted terminal, and a vehicle. The photovoltaic charging system includes a photovoltaic module, a power battery pack, and a non-power battery pack. The charging control method includes: acquiring (202) photovoltaic power of the photovoltaic module; and controlling (204), based on different preset power intervals, the photovoltaic module to charge a corresponding charging object under different photovoltaic power, the charging object including one of the power battery pack and the non-power battery pack, the non-power battery pack being configured to power the power battery pack or a vehicle-mounted device. Based on different preset power intervals, power of the photovoltaic module is segmented and utilized to realize charging control strategies for different charging objects.

## Description

### CROSS REFERENCE TO RELATED APPLICATIONS

This application claims priority to Chinese Patent Application No. 2024110394022, entitled "CHARGING CONTROL METHOD AND APPARATUS, PHOTOVOLTAIC CHARGING SYSTEM, VEHICLE-MOUNTED TERMINAL, AND VEHICLE", filed with the China Patent Office on July 31, 2024, the entire content of which is incorporated herein in its entirety.

### TECHNICAL FIELD

The present application relates to the field of photovoltaic technologies, and in particular to a charging control method and apparatus, a photovoltaic charging system, a vehicle-mounted terminal, and a vehicle.

### BACKGROUND

The statements herein merely provide background information related to the present application and do not necessarily constitute prior art.

With increases in utilization and market maintenance of new energy vehicles and rapid development of battery costs and the photovoltaic industry, an important foundation has been laid for combined development of photovoltaics and the new energy vehicles. At present, manufacturing and installation technologies of photovoltaic roofs are becoming more and more mature. Many foreign automobile enterprises have begun to use the photovoltaic roofs, and some domestic automobile enterprises have also started to debug and use prototype vehicles. However, there are problems of low charging efficiency and high energy consumption in an existing solution in which vehicle-mounted photovoltaic output supplies power to a power battery.

### SUMMARY

According to various embodiments of the present application, a charging control method and apparatus, a photovoltaic charging system, a vehicle-mounted terminal, and a vehicle are provided.

A charging control method, applied to a photovoltaic charging system of a vehicle, the photovoltaic charging system including a photovoltaic module, a power battery pack, and a non-power battery pack, the charging control method including:
acquiring photovoltaic power of the photovoltaic module; and
controlling, based on different preset power intervals, the photovoltaic module to charge a corresponding charging object under different photovoltaic power, the charging object including one of the power battery pack and the non-power battery pack, the non-power battery pack being configured to power the power battery pack or a vehicle-mounted device.

In an embodiment, the controlling, based on different preset power intervals, the photovoltaic module to charge a corresponding charging object under different photovoltaic power includes:
controlling, according to battery state information of the non-power battery pack in a case that the photovoltaic power is in a first preset power interval, the photovoltaic module to charge the non-power battery pack or controlling the photovoltaic module and the non-power battery pack to charge the power battery pack; and
controlling, in a case that the photovoltaic power is in a second preset power interval, the photovoltaic module to charge the power battery pack;
wherein a maximum value of the first preset power interval is less than a minimum value of the second preset power interval.

In an embodiment, the non-power battery pack includes a photovoltaic energy storage battery and a vehicle-mounted auxiliary battery, the first preset power interval includes a first preset range and a second preset range, and the controlling, according to battery state information of the non-power battery pack in a case that the photovoltaic power is in a first preset power interval, the photovoltaic module to charge the non-power battery pack or the power battery pack includes:
controlling, in a case that the photovoltaic power is in the first preset range and it is determined based on battery state information of the vehicle-mounted auxiliary battery that the vehicle-mounted auxiliary battery is to be charged, the photovoltaic module to charge the vehicle-mounted auxiliary battery, the vehicle-mounted auxiliary battery supporting powering the vehicle-mounted device; and
controlling, in a case that the photovoltaic power is in the second preset range and it is determined based on battery state information of the photovoltaic energy storage battery that the photovoltaic energy storage battery is to be charged, the photovoltaic module and the photovoltaic energy storage battery to charge the power battery pack;
wherein a minimum value of the second preset range is greater than a maximum value of the first preset range.

In an embodiment, the controlling, according to battery state information of the non-power battery pack in a case that the photovoltaic power is in a first preset power interval, the photovoltaic module to charge the non-power battery pack or the power battery pack further includes:
controlling, in a case that the photovoltaic power is in the second preset range and it is determined based on battery state information of the photovoltaic energy storage battery that the photovoltaic energy storage battery is to be charged, the photovoltaic module to charge the photovoltaic energy storage battery.

In an embodiment, the non-power battery pack includes a photovoltaic energy storage battery, the first preset power interval includes a second preset range, and the controlling, according to battery state information of the non-power battery pack in a case that the photovoltaic power is in a first preset power interval, the photovoltaic module to charge the non-power battery pack or the power battery pack further includes:
controlling, according to battery state information of the photovoltaic energy storage battery and state information of the vehicle in a case that the photovoltaic power is in the second preset range, the photovoltaic module to charge the photovoltaic energy storage battery or controlling the photovoltaic module and the photovoltaic energy storage battery to charge the power battery pack.

In an embodiment, the controlling, in a case that the photovoltaic power is in a second preset power interval, the photovoltaic module to charge the power battery pack includes:
acquiring, in a case that the photovoltaic power is in the second preset power interval, state information of the vehicle; the state information of the vehicle including an operating state; and
controlling, when the operating state of the vehicle is a parking state, the photovoltaic module to charge the power battery pack.

In an embodiment, the state information of the vehicle further includes a temperature in a cabin; and the controlling, in a case that the photovoltaic power is in a second preset power interval, the photovoltaic module to charge the power battery pack further includes:
controlling, in a case that the operating state of the vehicle is the parking state and the temperature in the cabin meets a preset condition, the photovoltaic module to charge the power battery pack.

In an embodiment, the controlling, in a case that the photovoltaic power is in a second preset power interval, the photovoltaic module to charge the power battery pack further includes:
cooling, in a case that the operating state of the vehicle is the parking state and the temperature in the cabin does not meet the preset condition, the cabin until the temperature in the cabin meets the preset condition.

In an embodiment, the photovoltaic charging system further includes a battery management system (BMS); and the charging control method further includes:
controlling, in a case that the photovoltaic module is controlled to charge the power battery pack, the BMS to monitor a battery state of the power battery pack.

In an embodiment, the charging control method further includes:
controlling, based on a determined maximum power point of the photovoltaic module, the photovoltaic module to perform output at maximum power.

A charging control apparatus, applied to a photovoltaic charging system of a vehicle, the photovoltaic charging system including a photovoltaic module, a power battery pack, and a non-power battery pack, the charging control apparatus including:
an acquisition module configured to acquire photovoltaic power of the photovoltaic module; and
a control module configured to control, based on different preset power intervals, the photovoltaic module to charge a corresponding charging object under different photovoltaic power, the charging object including one of the power battery pack and the non-power battery pack, the non-power battery pack being configured to power the power battery pack or a vehicle-mounted device.

A photovoltaic charging system, including:
a power battery pack and a non-power battery pack, the non-power battery pack being configured to power the power battery pack or a vehicle-mounted device;
a photovoltaic module configured to convert solar energy into electric energy; and
a control circuit configured to acquire photovoltaic power of the photovoltaic module; and control, based on different preset power intervals, the photovoltaic module to charge a corresponding charging object under different photovoltaic power, the charging object including one of the power battery pack and the non-power battery pack.

In an embodiment, the photovoltaic charging system further includes:
a voltage conversion circuit respectively connected to the control circuit, the photovoltaic module, the power battery pack, and the non-power battery pack and configured to perform voltage regulation on a signal outputted by the photovoltaic module to charge the charging object.

In an embodiment, the photovoltaic charging system further includes:
a BMS;
wherein the control circuit is further configured to control, in a case that the photovoltaic module is controlled to charge the power battery pack, the BMS to monitor a battery state of the power battery pack.

A vehicle-mounted terminal, including a memory and a processor, the memory storing a computer program, wherein the processor, when executing the computer program, implements steps of the charging control method as described above.

A vehicle, including the charging control apparatus as described above, or the photovoltaic charging system as described above, or the vehicle-mounted terminal as described above.

The details of one or more embodiments of the present application are set forth in the drawings and the description below. Other features, objects, and advantages of the present application will become apparent from the description, drawings, and claims.

### BRIEF DESCRIPTION OF THE DRAWINGS

In order to more clearly illustrate the technical solutions in embodiments of the present application or the prior art, the accompanying drawings used in the description of the embodiments or the prior art will be briefly introduced below. It is apparent that the accompanying drawings in the following description are only some embodiments of the present application, and other drawings can be obtained by those of ordinary skill in the art from the provided drawings without creative efforts.
FIG. 1 is a structural block diagram I of a photovoltaic charging system according to an embodiment;
FIG. 2 is a flowchart I of a charging control method according to an embodiment;
FIG. 3 is a flowchart II of the charging control method according to an embodiment;
FIG. 4 is a flowchart III of the charging control method according to an embodiment;
FIG. 5 is a flowchart IV of the charging control method according to an embodiment;
FIG. 6 is a flowchart V of the charging control method according to an embodiment;
FIG. 7 is a flowchart VI of the charging control method according to an embodiment;
FIG. 8 is a structural block diagram of a charging control apparatus according to an embodiment;
FIG. 9 is a structural block diagram II of the photovoltaic charging system according to an embodiment;
FIG. 10 is a flowchart VII of the charging control method according to an embodiment;
FIG. 11 is a flowchart VIII of the charging control method according to an embodiment; and
FIG. 12 is a flowchart IX of the charging control method according to an embodiment.

### DETAILED DESCRIPTION

In order to make the objectives, technical solutions, and advantages of the present application clearer, the present application will be further described in detail below with reference to the drawings and embodiments. It should be understood that the specific embodiments described here are only used to explain the present application and are not used to limit the present application.

It may be understood that the terms "first", "second", and the like used in the present application may be used herein to describe various elements, but these elements are not limited by these terms. These terms are only used to distinguish one element from another element and are not to be understood as indicating or implying relative importance or implying an indication of a quantity of an indicated technical feature. Therefore, a feature defined with "first" or "second" may explicitly or implicitly include at least one of the feature. In the description of the present application, "a plurality of" means at least two, such as two or three, unless otherwise expressly and specifically limited. It is to be noted that when one element is referred to as being "arranged on" another element, it may be directly disposed on the another element or an intermediate element may exist When one element is considered to be "connected to" another element, it may be directly connected to the another element or an intermediate element may co-exist.

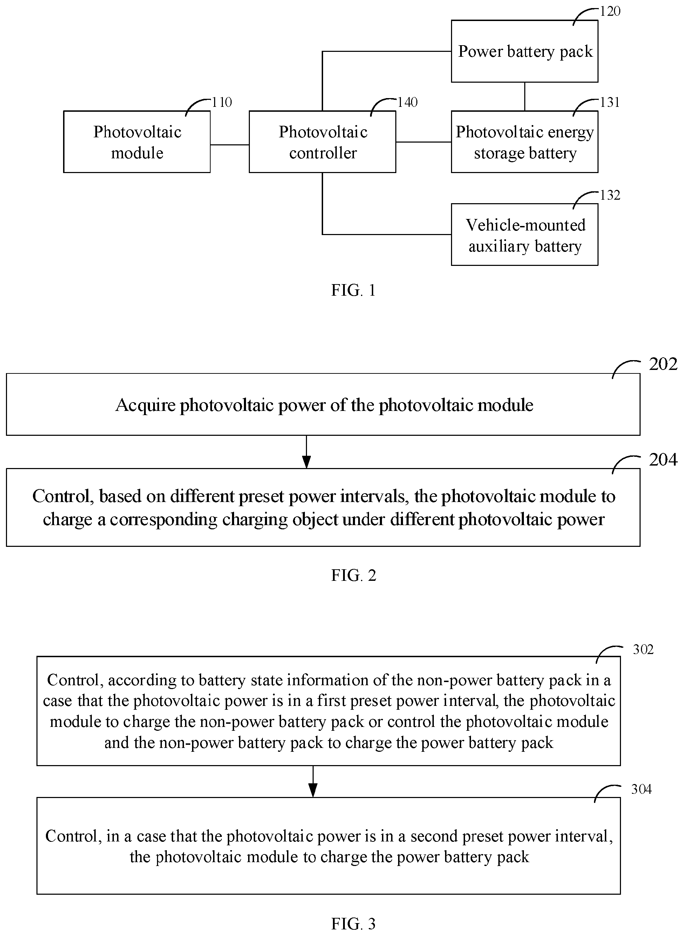

FIG. 1 is a schematic diagram of an application environment of a charging control method and apparatus and a vehicle-mounted terminal according to an embodiment. As shown in FIG. 1, a charging control method and apparatus and a vehicle-mounted terminal are applied to a photovoltaic charging system of a vehicle, and the photovoltaic charging system includes a photovoltaic module 110, a power battery pack 120, and a non-power battery pack 130.

The photovoltaic module 110 may be arranged at any position of the vehicle where solar energy may be absorbed, for example, a position on a roof of the vehicle. The photovoltaic module 110 may convert absorbed solar energy into DC electric energy to charge the power battery pack 120 and the non-power battery pack 130. The photovoltaic module 110 may include a plurality of photovoltaic cells. The plurality of photovoltaic cells are connected in series or parallel, and the plurality of photovoltaic cells may be arranged in an array. The photovoltaic cell is configured to directly convert solar energy into electric energy.

The power battery pack 120 may be used as a main power source for the vehicle and may power various vehicle-mounted devices and driving devices during operation of the vehicle. The power battery pack 120 may include one or more power batteries. The non-power battery pack 130 may include a photovoltaic energy storage battery 131 and a vehicle-mounted auxiliary battery 132. The photovoltaic energy storage battery 131 may store energy or power the power battery pack 120. The vehicle-mounted auxiliary battery 132 may be used as a backup power source for the vehicle to supply auxiliary power to various vehicle-mounted devices and driving devices in an emergency situation. The emergency situation may be, for example, a situation where the power battery pack 120 fails, resulting in failure of normal power supply. Optionally, the photovoltaic charging system further includes a BMS. When the power battery pack 120 is in a charging state, the BMS monitors a battery state of the power battery pack 120 to ensure safety of the power battery pack 120 and the entire vehicle.

Optionally, as shown in FIG. 1, the photovoltaic charging system includes a photovoltaic controller 140, and the charging control method may be performed by the photovoltaic controller 140. Further optionally, the photovoltaic controller may acquire output power of the photovoltaic module 110 and may also communicate with various battery packs to collect information such as battery states of the battery packs. The photovoltaic controller 140 may further receive the output power of the photovoltaic module 110 and transmit the output power to the battery packs based on the battery states of the battery packs or the like.

According to the charging control method and apparatus and the vehicle-mounted terminal in the present application, the photovoltaic module 110 may be controlled to charge either the power battery pack 120 or the non-power battery pack 130 in a power segmented manner to realize charging control strategies for different charging objects., thereby achieving efficient use of the photovoltaic power and improving charging efficiency. Moreover, when the BMS is required to monitor a state of the power battery pack 120, since the photovoltaic module 110 charges the power battery pack 120 only when the photovoltaic power is in a certain preset power interval, the BMS is not required to be turned on in real time, which reduces power consumption of the BMS, also increases a charging speed, and is more efficient.

FIG. 2 is a flowchart of the charging control method according to an embodiment. As shown in FIG. 2, the charging control method includes step 202 to step 204.

In step 202, photovoltaic power of the photovoltaic module is acquired.

In step 204, the photovoltaic module is controlled to charge a corresponding charging object under different photovoltaic power based on different preset power intervals. The charging object includes one of a power battery pack and a non-power battery pack. The non-power battery pack is configured to power the power battery pack or a vehicle-mounted device.

The steps of the charging control method may be performed by a photovoltaic controller. The photovoltaic controller may include a power detection circuit inside. The photovoltaic power of the photovoltaic module may be detected through the power detection circuit. Please refer to the previous embodiment for relevant introduction to the photovoltaic module, the power battery pack, and the non-power battery pack.

Different preset power intervals are in preset one-to-one correspondence to different charging objects. By acquiring the photovoltaic power of the photovoltaic module, based on a preset power interval to which the determined photovoltaic power belongs, a charging object at the photovoltaic power may be determined, and then the photovoltaic module is controlled to charge the corresponding charging object. Therefore, efficient use of the photovoltaic power can be achieved, and charging efficiency can be improved.

In the related art, the photovoltaic module directly boosts a photovoltaic output low voltage to a high voltage for the power battery pack. Since the power battery pack of the vehicle has a large capacity (for example, 60 kilowatt hours of electricity may be required), the charging efficiency is excessively low based on theoretical photovoltaic output of 1.5 kilowatt hours of electricity per day. Moreover, direct boosting from a photovoltaic low voltage to a high voltage may require multi-stage boosting, and conversion efficiency is ordinary. In addition, when the power battery pack is charged, the BMS is required to be turned on all the time, leading to high energy consumption. If the photovoltaic module charges the non-power battery pack all the time, the non-power battery pack has a small passing capacity, and electricity generated by the photovoltaic module may be wasted.

According to the charging control method provided in this embodiment, photovoltaic power of the photovoltaic module is acquired, and based on different preset power intervals, the photovoltaic module is controlled to charge the corresponding charging object under different photovoltaic power. On the one hand, based on different preset power intervals, power of the photovoltaic module is segmented and utilized to realize charging control strategies for different charging objects, thereby achieving efficient use of the photovoltaic power and improving charging efficiency. On the other hand, the photovoltaic module charges the power battery pack only when the photovoltaic power is in a certain preset power interval. Therefore, the BMS is not required to be turned on in real time, which reduces power consumption of the BMS, also increases a charging speed, and is more efficient.

In an embodiment, as shown in FIG. 3, the controlling, based on different preset power intervals, the photovoltaic module to charge a corresponding charging object under different photovoltaic power includes step 302 to step 304.

In step 302, in a case that the photovoltaic power is in a first preset power interval, according to battery state information of the non-power battery pack, the photovoltaic module is controlled to charge the non-power battery pack or the photovoltaic module and the non-power battery pack are controlled to charge the power battery pack. In step 304, in a case that the photovoltaic power is in a second preset power interval, the photovoltaic module is controlled to charge the power battery pack.

The battery state information of the non-power battery pack may include, for example, a state of charge (SOC), which is an amount of charge available in the battery, expressed as a percentage. The SOC may reflect the remaining capacity of the battery, and charging and discharging requirements of the non-power battery pack may be determined based on the battery state information. Optionally, the steps of the charging control method may be performed by a photovoltaic controller. The photovoltaic controller may communicate by CAN/LIN/RS485 or the like, to acquire a SOC of the non-power battery pack.

A maximum value of the first preset power interval is less than a minimum value of the second preset power interval. In the case of the first preset power interval, power outputted by the photovoltaic module is relatively low, which may meet the charging requirement of the non-power battery pack. If it is determined based on the battery state information of the non-power battery pack that the non-power battery pack has a charging requirement, the photovoltaic module may be directly controlled to charge the non-power battery pack to avoid a waste of power generated by the photovoltaic module. In another case, if it is determined based on the battery state information of the non-power battery pack that the non-power battery pack has no charging requirement, although the power of the photovoltaic module is low, the photovoltaic module may be combined with the non-power battery pack to charge the power battery pack at the same time, which may also be suitable for the charging requirement of the power battery pack, with a fast speed and high efficiency. In the case of the second preset power interval, the power outputted by the photovoltaic module is relatively high, and the photovoltaic module charges the power battery pack separately, which may meet a charging requirement of the power battery pack.

Therefore, through step 302 to step 304, power segmented charging of the photovoltaic module can be achieved, and charging requirements of different charging objects can be matched, which can achieve efficient charging and reduce energy consumption.

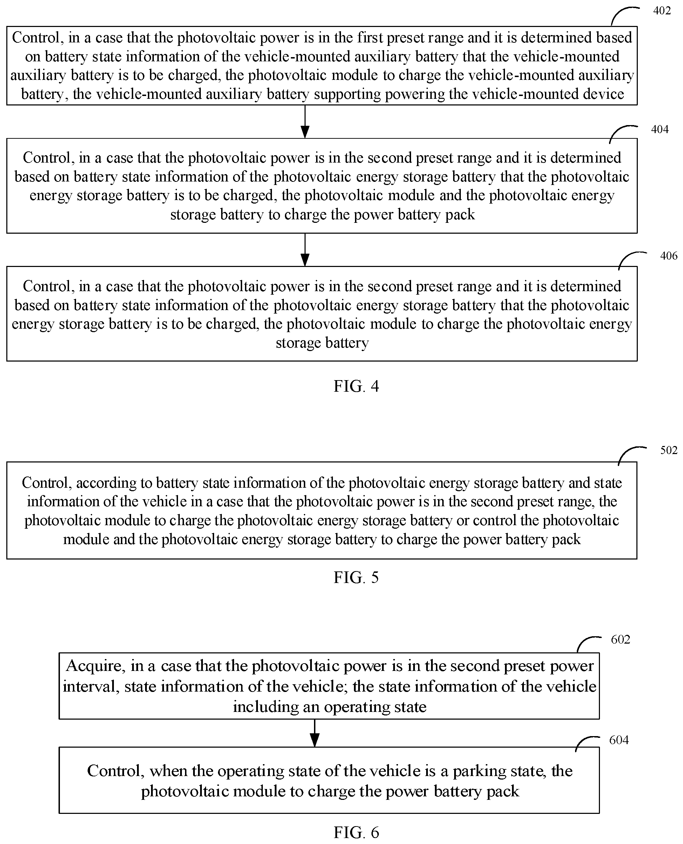

In an embodiment, the non-power battery pack includes a photovoltaic energy storage battery and a vehicle-mounted auxiliary battery. The photovoltaic energy storage battery and the vehicle-mounted auxiliary battery may be obtained with reference to the description in the above embodiments. As shown in FIG. 4, the controlling, according to battery state information of the non-power battery pack in a case that the photovoltaic power is in a first preset power interval, the photovoltaic module to charge the non-power battery pack or the power battery pack includes step 402 to step 404.

In step 402, in a case that the photovoltaic power is in the first preset range and it is determined based on battery state information of the vehicle-mounted auxiliary battery that the vehicle-mounted auxiliary battery is to be charged, the photovoltaic module is controlled to charge the vehicle-mounted auxiliary battery, wherein the vehicle-mounted auxiliary battery supports powering the vehicle-mounted device. In step 404, in a case that the photovoltaic power is in the second preset range and it is determined based on battery state information of the photovoltaic energy storage battery that the photovoltaic energy storage battery is to be charged, the photovoltaic module and the photovoltaic energy storage battery are controlled to charge the power battery pack.

The first preset power interval includes a first preset range and a second preset range. A minimum value of the second preset range is greater than a maximum value of the first preset range. In a case that the photovoltaic power is in the first preset range, the photovoltaic power is relatively low. In a case that the photovoltaic power is in the second preset range, the photovoltaic power is relatively high.

Charging and discharging requirements of the vehicle-mounted auxiliary battery and the photovoltaic module may be determined based on the battery state information.

The vehicle-mounted auxiliary battery is a storage battery for emergency use by a power supply device in the vehicle. The vehicle-mounted storage battery has a small capacity, only part of which may generally be used, and may be suitable for low-power charging. In a case that the photovoltaic power is in the first preset range and it is determined based on battery state information of the vehicle-mounted auxiliary battery that the vehicle-mounted auxiliary battery is to be charged, the photovoltaic module is controlled to charge the vehicle-mounted auxiliary battery, which can meet a charging requirement of the vehicle-mounted auxiliary battery, avoid a waste of photovoltaic power generation, and improve photovoltaic utilization.

The photovoltaic energy storage battery has a larger capacity than the vehicle-mounted auxiliary battery and may be suitable for medium-power charging. In a case that the photovoltaic power is in the second preset range and it is determined based on battery state information of the photovoltaic energy storage battery that the photovoltaic energy storage battery is to be charged, it is determined that the photovoltaic energy storage battery is fully charged or nearly fully charged, and the photovoltaic module and the photovoltaic energy storage battery are controlled to charge the power battery pack, which can meet the charging requirement of the power battery pack, reduce power consumption of the BMS, increase a charging speed, and be more efficient.

In an embodiment, as shown in FIG. 4, the controlling, according to battery state information of the non-power battery pack in a case that the photovoltaic power is in a first preset power interval, the photovoltaic module to charge the non-power battery pack or the power battery pack further includes step 406.

In step 406, in a case that the photovoltaic power is in the second preset range and it is determined based on battery state information of the photovoltaic energy storage battery that the photovoltaic energy storage battery is to be charged, the photovoltaic module is controlled to charge the photovoltaic energy storage battery.

The photovoltaic energy storage battery has a larger capacity than the vehicle-mounted auxiliary battery and may be suitable for medium-power charging. In a case that the photovoltaic power is in the second preset range and it is determined based on battery state information of the photovoltaic energy storage battery that the photovoltaic energy storage battery is to be charged, the photovoltaic module is controlled to charge the photovoltaic energy storage battery, which can meet a charging requirement of the photovoltaic energy storage battery and improve charging efficiency.

In an embodiment, as shown in FIG. 5, the non-power battery pack includes a photovoltaic energy storage battery, the first preset power interval includes a second preset range, and the controlling, according to battery state information of the non-power battery pack in a case that the photovoltaic power is in a first preset power interval, the photovoltaic module to charge the non-power battery pack or the power battery pack further includes step 502.

In step 502, in a case that the photovoltaic power is in the second preset range, according to battery state information of the photovoltaic energy storage battery and state information of the vehicle, the photovoltaic module is controlled to charge the photovoltaic energy storage battery or the photovoltaic module and the photovoltaic energy storage battery are controlled to charge the power battery pack.

The state information of the vehicle may include information such as an operating state of the vehicle and a temperature in a cabin in the vehicle. Charging and discharging requirements of the photovoltaic energy storage battery and a charging environment of the power battery pack may be determined based on the battery state information of the photovoltaic energy storage battery and the state information of the vehicle, and a charging state of the power battery pack may be controlled based on the charging environment of the power battery pack, which may ensure charging safety and stability of the power battery pack and the entire vehicle.

In a case that the photovoltaic power is in the second preset range and it is determined according to battery state information of the photovoltaic energy storage battery that the photovoltaic energy storage battery is to be charged, the photovoltaic module is controlled to charge the photovoltaic energy storage battery, which can make the power of the photovoltaic module match a charging requirement of the charging object and improve charging efficiency. In a case that the photovoltaic energy storage battery may support discharging and a current charging environment of the power battery pack meets a safe charging condition, the photovoltaic module and the photovoltaic energy storage battery may be controlled to charge the power battery pack, which can improve charging efficiency on the basis of reducing power consumption and improving safety.

Further, embodiments of how to control charging of the photovoltaic energy storage battery and the power battery pack according to the battery state information of the photovoltaic energy storage battery and the state information of the vehicle may be obtained with reference to the following, and details are not described herein.

In an embodiment, as shown in FIG. 6, the controlling, in a case that the photovoltaic power is in a second preset power interval, the photovoltaic module to charge the power battery pack includes step 602 to step 604.

In step 602, in a case that the photovoltaic power is in the second preset power interval, state information of the vehicle is acquired; wherein the state information of the vehicle includes an operating state. In step 604, when the operating state of the vehicle is a parking state, the photovoltaic module is controlled to charge the power battery pack.

The second preset power interval is larger than the first preset power interval. In a case that the photovoltaic power is in the second preset power interval, the photovoltaic power may be understood as being higher than other photovoltaic power, and the power may meet the charging requirement of the power battery pack.

The state information of the vehicle includes an operating state. The operating state may include a parking state and a starting state. The parking state may be understood as that an electrical system of the vehicle is turned off, that is, the vehicle is not ignited or turned off. The starting state may be understood as that the electrical system of the vehicle powered on, that is, the vehicle is ignited or turned on. When the operating state of the vehicle is the parking state, the photovoltaic module is controlled to charge the power battery pack, which can further improve the charging safety of the power battery pack and the entire vehicle, and further improve convenience of charging control.

Optionally, the state information of the vehicle is acquired by acquiring an ignition (IG) signal of the vehicle to determine the operating state of the vehicle. For example, when the IG signal is in a low-level state, it is determined that the vehicle is in the parking state. When the IG signal is in a high-level state, it is determined that the vehicle is in the starting state.

In this embodiment, in a case that the photovoltaic power is in the second preset power interval, the state information of the vehicle is acquired first, a current operating state of the vehicle is determined, and when the operating state of the vehicle is the parking state, the photovoltaic module is then controlled to charge the power battery pack, which can further improve the charging safety. It may be understood that the determination of the operating state of the vehicle is introduced in this embodiment, which can further improve the charging safety and the convenience of charging control in practical applications. However, it is to be noted that both the first preset power interval and the second preset power interval may be safe power intervals set according to actual charging requirements. The power in the two intervals can achieve safe charging.

In other embodiments, to further combine charging control with other charging environments of the power battery pack, the state information of the vehicle may further include other vehicle parameters, for example, a temperature in a cabin. Please refer to the following introduction for optional examples.

In an embodiment, as shown in FIG, 7, the state information of the vehicle further includes a temperature in a cabin; and the controlling, in a case that the photovoltaic power is in a second preset power interval, the photovoltaic module to charge the power battery pack further includes step 702.

In step 702, in a case that the operating state of the vehicle is the parking state and the temperature in the cabin meets a preset condition, the photovoltaic module is controlled to charge the power battery pack. Therefore, the charging safety and the convenience of charging control can be further improved, and comfort of a user in the vehicle can also be improved. Optionally, the preset condition may be that the temperature in the cabin is less than a preset upper limit temperature value.

Optionally, in a case that the photovoltaic power is in the second preset power interval, the state information of the vehicle may be acquired first, a current operating state of the vehicle is determined, when the operating state of the vehicle is the parking state, the temperature in the cabin is further determined, and in a case that the temperature in the cabin is less than the preset upper limit temperature value, the photovoltaic module is controlled to charge the power battery pack.

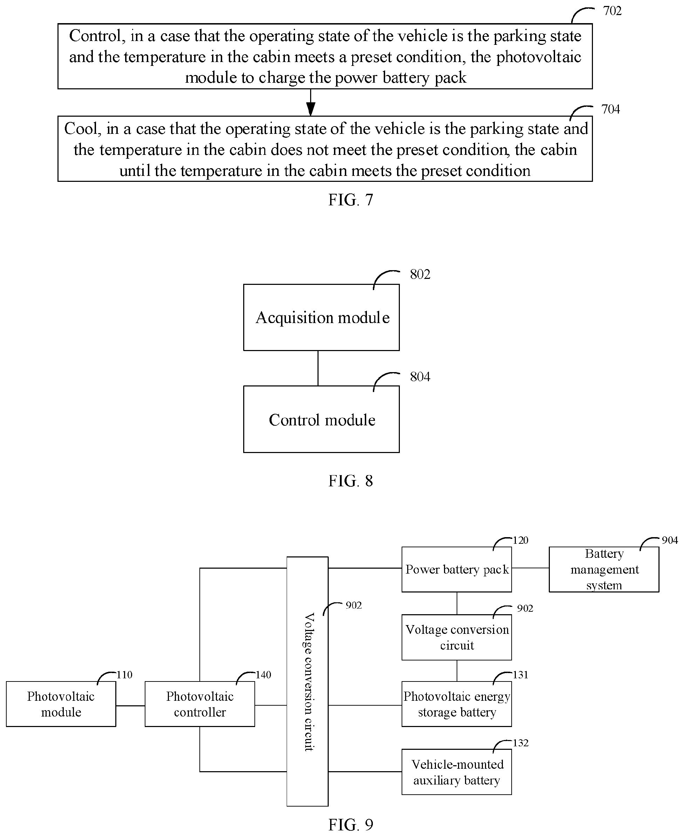

In an embodiment, still referring to FIG. 7, the controlling, in a case that the photovoltaic power is in a second preset power interval, the photovoltaic module to charge the power battery pack includes step 704.

In step 704, in a case that the operating state of the vehicle is the parking state and the temperature in the cabin does not meet the preset condition, the cabin is cooled until the temperature in the cabin meets the preset condition.

Optionally, the photovoltaic charging system may include a blower, in a case that the operating state of the vehicle is the parking state and the temperature in the cabin does not meet the preset condition, the blower is controlled to start to dissipate heat, the cabin is cooled through heat dissipation by the fan until the temperature in the cabin meets the preset condition, and the photovoltaic module is controlled to charge the power battery pack.

In an embodiment, the photovoltaic charging system further includes a BMS; and the charging control method further includes: controlling, in a case that the photovoltaic module is controlled to charge the power battery pack, the BMS to monitor a battery state of the power battery pack.

The power battery module may generally be a lithium battery. The BMS may monitor the battery state of the power battery pack when the power battery pack is in a charging state, to ensure charging and discharging safety of the lithium battery and safety of the entire vehicle. Optionally, when the charging control method is performed by the photovoltaic controller, the BMS and the photovoltaic controller may communicate in real time. The photovoltaic controller may send, to the BMS, information such as a battery voltage, a current, a temperature, a SOC, and state code that are acquired by detection, so that the BMS monitors the battery state of the power battery pack and performs related steps based on the battery state, to meet charging and discharging safety requirements of the lithium battery and safety requirements of the entire vehicle.

Optionally, a high-voltage switch may be provided inside the BMS. The high-voltage switch may be understood as a physical switch, such as a relay or a switching tube. The BMS may be controlled to start when a wake-up signal is sent to the high-voltage switch of the BMS.

In an embodiment, the charging control method further includes: controlling the photovoltaic module to perform output at maximum power based on a determined maximum power point of the photovoltaic module, to maximize output power of the photovoltaic module. Optionally, the charging control method may be performed by a maximum power point tracking (MPPT) photovoltaic controller. The photovoltaic module absorbs sunlight and outputs the sunlight to the photovoltaic controller as an input source thereof, and the photovoltaic controller uses a certain MPPT control method to keep the output operating at the maximum power point all the time, which can realize charging of the vehicle-mounted auxiliary battery, the photovoltaic energy storage battery, and the power battery pack.

It should be understood that, although the steps in the flowchart above are displayed in sequence as indicated by the arrows, the steps are not necessarily performed in the order indicated by the arrows. Unless otherwise clearly specified herein, the steps are performed without any strict sequence limitation, and may be performed in other orders. In addition, at least some steps in the flowchart above may include a plurality of sub-steps or a plurality of stages, and such sub-steps or stages are not necessarily performed at a same moment, and may be performed at different moments. The sub-steps or stages are not necessarily performed in sequence, and the sub-steps or stages and at least some of other steps or sub-steps or stages of other steps may be performed in turn or alternately.

An embodiment of the present application further provides a charging control apparatus. The implementation solution to the problem provided in the apparatus is similar to that described in the above method. Therefore, specific limitations in the embodiments of the charging control apparatus provided below may be obtained with reference to the limitations on the charging control method above. Details are not described herein again.

In an embodiment, as shown in FIG. 8, a charging control apparatus is provided, applied to a photovoltaic charging system of a vehicle. The photovoltaic charging system includes a photovoltaic module, a power battery pack, and a non-power battery pack. The charging control apparatus includes an acquisition module 802 and a control module 804.

The acquisition module 802 is configured to acquire photovoltaic power of the photovoltaic module. The control module 804 is configured to control, based on different preset power intervals, the photovoltaic module to charge a corresponding charging object under different photovoltaic power. The charging object includes one of the power battery pack and the non-power battery pack. The non-power battery pack is configured to power the power battery pack or to a vehicle-mounted device.

According to the charging control apparatus provided in this embodiment, the acquisition module 802 acquires the photovoltaic power of the photovoltaic module, and the control module 804 controls, based on different preset power intervals, the photovoltaic module to charge the corresponding charging object under different photovoltaic power. On the one hand, based on different preset power intervals, power of the photovoltaic module is segmented and utilized to realize charging control strategies for different charging objects, thereby achieving efficient use of the photovoltaic power and improving charging efficiency. On the other hand, the photovoltaic module charges the power battery pack only when the photovoltaic power is in a certain preset power interval. Therefore, the BMS is not required to be turned on in real time, which reduces power consumption of the BMS, also increases a charging speed, and is more efficient.

Based on a same inventive concept, an embodiment of the present application further provides a photovoltaic charging system configured to implement the charging control method above. The implementation solution to the problem provided in the photovoltaic charging system is similar to that described in the above method and apparatus. Therefore, specific limitations in the embodiments of the photovoltaic charging system provided below may be obtained with reference to the limitations on the charging control method and apparatus above. Details are not described herein again.

In an embodiment, the photovoltaic charging system includes a power battery pack, a non-power battery pack, a photovoltaic module, and a control circuit.

The non-power battery pack is configured to power the power battery pack or a vehicle-mounted device. The photovoltaic module is configured to convert solar energy into electric energy. The control circuit is configured to acquire photovoltaic power of the photovoltaic module; and control, based on different preset power intervals, the photovoltaic module to charge a corresponding charging object under different photovoltaic power. The charging object includes one of the power battery pack and the non-power battery pack. The control circuit may be the photovoltaic controller described in the above embodiments. Refer to the above embodiments for the power battery pack, the non-power battery pack, the photovoltaic module, and the photovoltaic controller.

According to the photovoltaic charging system provided in this embodiment, photovoltaic power of the photovoltaic module is acquired, and based on different preset power intervals, the photovoltaic module is controlled to charge the corresponding charging object under different photovoltaic power. On the one hand, based on different preset power intervals, power of the photovoltaic module is segmented and utilized to realize charging control strategies for different charging objects, thereby achieving efficient use of the photovoltaic power and improving charging efficiency. On the other hand, the photovoltaic module charges the power battery pack only when the photovoltaic power is in a certain preset power interval. Therefore, the BMS is not required to be turned on in real time, which reduces power consumption of the BMS, also increases a charging speed, and is more efficient.

In an embodiment, on the basis of FIG. 1, as shown in FIG. 9, the photovoltaic charging system further includes: a voltage conversion circuit (902 in the figure) connected to the control circuit (the photovoltaic controller 140 in the figure), the photovoltaic module, the power battery pack, and the non-power battery pack respectively and configured to perform voltage regulation on a signal outputted by the photovoltaic module to charge the charging object. The voltage conversion circuit may include, for example, a DC-DC buck circuit.

In an embodiment, as shown in FIG. 9, the photovoltaic charging system further includes a BMS (904 in the figure). The control circuit is further configured to control, in a case that the photovoltaic module is controlled to charge the power battery pack, the BMS to monitor a battery state of the power battery pack. Refer to the above embodiments for the related description of the BMS. Details are not described herein.

The division of the modules in the charging control apparatus and the photovoltaic charging system above is only for illustration. In other embodiments, the charging control apparatus and the photovoltaic charging system may be divided into different modules as required, to complete all or part of the functions of the charging control apparatus and the photovoltaic charging system above.

The modules in the charging control apparatus and the photovoltaic charging system above may be implemented entirely or partially by software, hardware, or a combination thereof. The above modules may be built in or independent of a processor of a computer device in a hardware form, or may be stored in a memory of the computer device in a software form, to facilitate the processor to invoke and perform operations corresponding to the above modules.

In the following, some optional examples in which the photovoltaic module is arranged on the top of the vehicle, referred to as a photovoltaic roof, and the preset power intervals are respectively an interval A, an interval B, and an interval C, where the interval A < the interval B < the interval C to further elaborate on the above embodiments. Output of the photovoltaic roof is connected to input of the photovoltaic controller. Output of the photovoltaic controller may be connected to each battery pack through the DC-DC buck circuit. Output of the photovoltaic energy storage battery may be connected to the power battery pack through the DC-DC buck circuit. A communication terminal of the photovoltaic controller may communicate with each battery pack through CAN/LIN/RS485.

### Embodiment 1

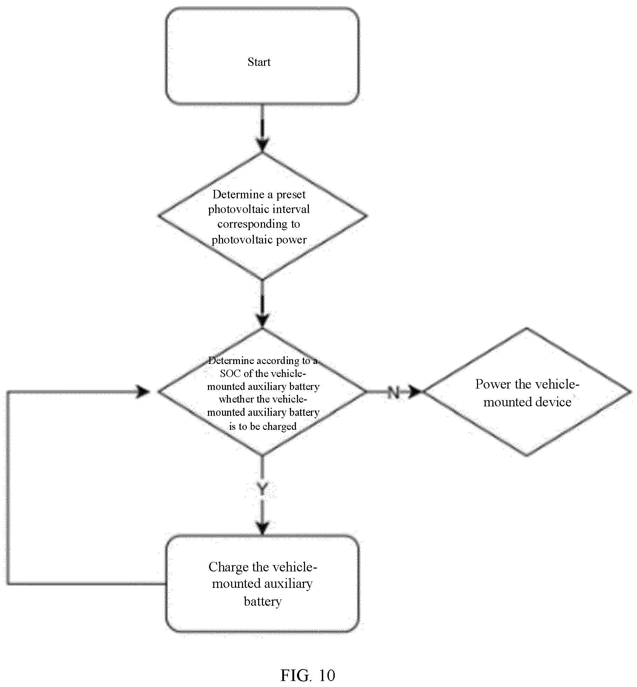

As shown in FIG. 10, the photovoltaic controller first determines the preset power interval corresponding to the photovoltaic power, and when determining that output power of the photovoltaic roof is in the interval A and determining based on a SOC of the vehicle-mounted auxiliary battery that the vehicle-mounted auxiliary battery is to be charged, turns on a DC-DC circuit to convert the output of the photovoltaic roof and charge the vehicle-mounted auxiliary battery; and supplies power to the vehicle-mounted device when determining that the vehicle-mounted auxiliary battery supports charging.

### Embodiment 2

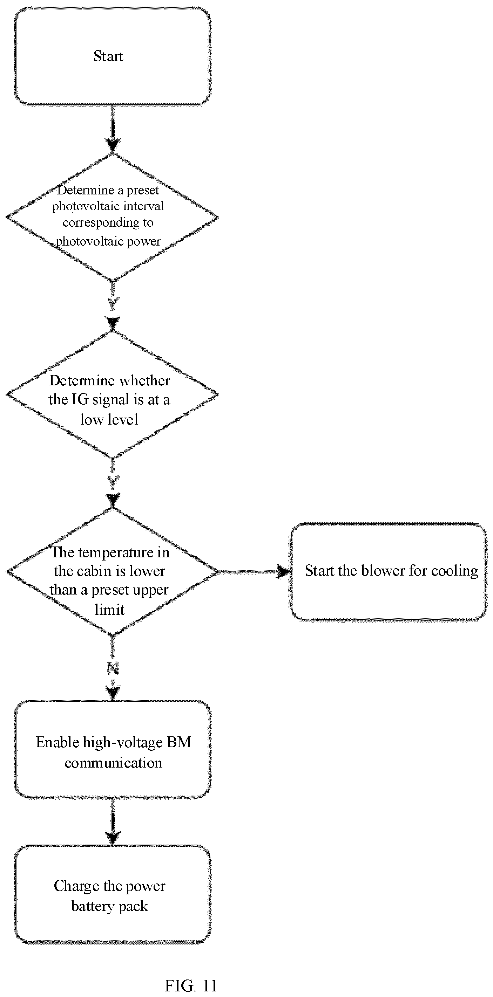

As shown in FIG. 11, the photovoltaic controller first determines the preset power interval corresponding to the photovoltaic power, and after determining that the output power of the photovoltaic roof is in the interval B, determines whether the IG signal is at a low level, that is, whether the vehicle is parked and the electrical system is powered off, and then determines whether the temperature in the cabin exceeds a limit. If the limit is exceeded, the blower is turned on to cool down, and when the temperature in the cabin is lower than a preset upper limit, the photovoltaic energy storage battery is charged. During the charging, it is detected based on the battery state of the photovoltaic energy storage battery whether the photovoltaic energy storage battery is fully charged. After it is fully charged, the high-voltage switch is turned on, BMS communication is enabled, and the output of the photovoltaic roof and the photovoltaic energy storage battery pass through a DC-DC boost circuit to charge the vehicle-mounted power battery. If it is detected based on the battery state of the photovoltaic energy storage battery that the photovoltaic energy storage battery is not fully charged during this period, the photovoltaic energy storage battery is recharged. In this case, the high-voltage switch is turned off, and BMS communication is disabled. After the photovoltaic energy storage battery is fully charged, the high-voltage switch is turned on, and BMS communication is enabled.

### Embodiment 3

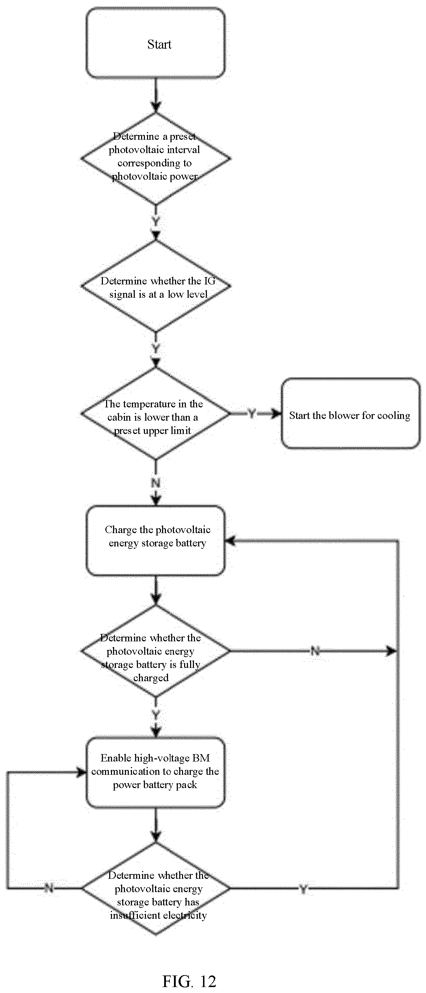

As shown in FIG. 12, the photovoltaic controller first determines the preset power interval corresponding to the photovoltaic power, and after determining that the output power of the photovoltaic roof is in the interval C, determines whether a signal of the vehicle is at a low level, that is, whether the vehicle is parked and the electrical system is powered off, and then determines whether the temperature in the cabin exceeds a limit. If the limit is exceeded, the blower is turned on to cool down, and when the temperature in the cabin is lower than the preset upper limit, BMS communication is enabled, and a high-voltage channel is opened to charge the power battery pack according to battery demand information of CAN communication.

An embodiment of the present application further provides a vehicle-mounted terminal, including a memory and a processor. The memory stores a computer program. The processor, when executing the computer program, implements steps of the charging control method as described above. Therefore, on the basis of reducing power consumption, efficient use of the photovoltaic power can be achieved, and charging efficiency can be improved.

An embodiment of the present application further provides a vehicle, including the charging control apparatus as described above, or the photovoltaic charging system as described above, or the vehicle-mounted terminal as described above, which can achieve efficient use of the photovoltaic power and improve charging efficiency on the basis of reducing power consumption.

The present application further provides a computer program product, including a computer program. The computer program, when executed by a processor, implements steps of the charging control method as described in the above embodiments.

Any reference to the memory, storage, database, or other media used in the present application may include a non-volatile memory and/or a volatile memory. The appropriate non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM), which serves as an external cache. By way of illustration instead of limitation, the RAM is available in a variety of forms, such as a static RAM (SRAM), a dynamic RAM (DRAM), a synchronous DRAM (SDRAM), a dual data rate SDRAM (DDRSDRAM), an enhanced SDRAM (ESDRAM), a synchronization link (Synchlink) DRAM (SLDRAM), a memory Bus (Rambus) direct RAM (RDRAM), a direct memory bus dynamic RAM (DRDRAM), and a memory bus dynamic RAM (RDRAM).

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present application, and their description is specific and detailed, but cannot therefore be understood as a limitation on the patent scope of the present application. It should be noted that those of ordinary skill in the art may further make variations and improvements without departing from the conception of the present application, and these all fall within the protection scope of the present application. Therefore, the patent protection scope of the present application should be subject to the appended claims.

## Claims

1. A charging control method, applied to a photovoltaic charging system of a vehicle, the photovoltaic charging system comprising a photovoltaic module, a power battery pack, and a non-power battery pack, the charging control method comprising:
acquiring photovoltaic power of the photovoltaic module;
controlling, based on different preset power intervals, the photovoltaic module to charge a corresponding charging object under different photovoltaic power, the charging object comprising one of the power battery pack and the non-power battery pack, the non-power battery pack being configured to power the power battery pack or a vehicle-mounted device.

2. The charging control method according to claim 1, wherein the controlling, based on different preset power intervals, the photovoltaic module to charge a corresponding charging object under different photovoltaic power comprises:
controlling, according to battery state information of the non-power battery pack in a case that the photovoltaic power is in a first preset power interval, the photovoltaic module to charge the non-power battery pack or controlling the photovoltaic module and the non-power battery pack to charge the power battery pack;
controlling, in a case that the photovoltaic power is in a second preset power interval, the photovoltaic module to charge the power battery pack;
wherein a maximum value of the first preset power interval is less than a minimum value of the second preset power interval.

3. The charging control method according to claim 2, wherein the non-power battery pack comprises a photovoltaic energy storage battery and a vehicle-mounted auxiliary battery, the first preset power interval comprises a first preset range and a second preset range, and the controlling, according to battery state information of the non-power battery pack in a case that the photovoltaic power is in a first preset power interval, the photovoltaic module to charge the non-power battery pack or the power battery pack comprises:
controlling, in a case that the photovoltaic power is in the first preset range and it is determined based on battery state information of the vehicle-mounted auxiliary battery that the vehicle-mounted auxiliary battery is to be charged, the photovoltaic module to charge the vehicle-mounted auxiliary battery, the vehicle-mounted auxiliary battery supporting powering the vehicle-mounted device;
controlling, in a case that the photovoltaic power is in the second preset range and it is determined based on battery state information of the photovoltaic energy storage battery that the photovoltaic energy storage battery is to be charged, the photovoltaic module and the photovoltaic energy storage battery to charge the power battery pack;
wherein a minimum value of the second preset range is greater than a maximum value of the first preset range.

4. The charging control method according to claim 3, wherein the controlling, according to battery state information of the non-power battery pack in a case that the photovoltaic power is in a first preset power interval, the photovoltaic module to charge the non-power battery pack or the power battery pack further comprises:
controlling, in a case that the photovoltaic power is in the second preset range and it is determined based on battery state information of the photovoltaic energy storage battery that the photovoltaic energy storage battery is to be charged, the photovoltaic module to charge the photovoltaic energy storage battery.

5. The charging control method according to claim 2, wherein the non-power battery pack comprises a photovoltaic energy storage battery, the first preset power interval comprises a second preset range, and the controlling, according to battery state information of the non-power battery pack in a case that the photovoltaic power is in a first preset power interval, the photovoltaic module to charge the non-power battery pack or the power battery pack further comprises:
controlling, according to battery state information of the photovoltaic energy storage battery and state information of the vehicle in a case that the photovoltaic power is in the second preset range, the photovoltaic module to charge the photovoltaic energy storage battery.

6. The charging control method according to claim 2, wherein the non-power battery pack comprises a photovoltaic energy storage battery, the first preset power interval comprises a second preset range, and the controlling, according to battery state information of the non-power battery pack in a case that the photovoltaic power is in a first preset power interval, the photovoltaic module to charge the non-power battery pack or the power battery pack further comprises:
in a case that the photovoltaic power is in the second preset range, controlling, according to the battery state information of the photovoltaic energy storage battery and the state information of the vehicle, the photovoltaic module and the photovoltaic energy storage battery to charge the power battery pack.

7. The charging control method according to claim 2, wherein the controlling, in a case that the photovoltaic power is in a second preset power interval, the photovoltaic module to charge the power battery pack comprises:
acquiring, in a case that the photovoltaic power is in the second preset power interval, state information of the vehicle; the state information of the vehicle comprising an operating state;
controlling, when the operating state of the vehicle is a parking state, the photovoltaic module to charge the power battery pack.

8. The charging control method according to claim 7, wherein the state information of the vehicle further comprises a temperature in a cabin; and the controlling, in a case that the photovoltaic power is in a second preset power interval, the photovoltaic module to charge the power battery pack further comprises:
controlling, in a case that the operating state of the vehicle is the parking state and the temperature in the cabin meets a preset condition, the photovoltaic module to charge the power battery pack.

9. The charging control method according to claim 8, wherein the controlling, in a case that the photovoltaic power is in a second preset power interval, the photovoltaic module to charge the power battery pack further comprises:
cooling, in a case that the operating state of the vehicle is the parking state and the temperature in the cabin does not meet the preset condition, the cabin until the temperature in the cabin meets the preset condition.

10. The charging control method according to claim 7, wherein the acquiring the state information of the vehicle comprises:
acquiring an ignition signal of the vehicle;
when the ignition signal is in a low-level state, determining that the vehicle is in the parking state;
when the ignition signal is in a high-level state, determining that the vehicle is in a starting state.

11. The charging control method according to any one of claims 1 to 10, wherein the photovoltaic charging system further comprises a battery management system; and the charging control method further comprises:
controlling, in a case that the photovoltaic module is controlled to charge the power battery pack, the battery management system to monitor a battery state of the power battery pack.

12. The charging control method according to claim 11, wherein the battery management system is provided with a high-voltage switch, the controlling the battery management system to monitor a battery state of the power battery pack comprises:
sending a wake-up signal to the high-voltage switch, to control the battery management system to start monitoring of the battery state of the power battery pack.

13. The charging control method according to any one of claims 1 to 10, wherein the charging control method further comprises:
controlling, based on a determined maximum power point of the photovoltaic module, the photovoltaic module to perform output at maximum power.

14. A charging control apparatus, applied to a photovoltaic charging system of a vehicle, the photovoltaic charging system comprising a photovoltaic module, a power battery pack, and a non-power battery pack, the charging control apparatus comprising:
an acquisition module configured to acquire photovoltaic power of the photovoltaic module;
a control module configured to control, based on different preset power intervals, the photovoltaic module to charge a corresponding charging object under different photovoltaic power, the charging object comprising one of the power battery pack and the non-power battery pack, the non-power battery pack being configured to power the power battery pack or a vehicle-mounted device.

15. A photovoltaic charging system, comprising:
a power battery pack and a non-power battery pack, the non-power battery pack being configured to power the power battery pack or a vehicle-mounted device;
a photovoltaic module configured to convert solar energy into electric energy;
a control circuit configured to acquire photovoltaic power of the photovoltaic module; and control, based on different preset power intervals, the photovoltaic module to charge a corresponding charging object under different photovoltaic power, the charging object comprising one of the power battery pack and the non-power battery pack.

16. The photovoltaic charging system according to claim 15, further comprising:
a voltage conversion circuit respectively connected to the control circuit, the photovoltaic module, the power battery pack, and the non-power battery pack and configured to perform voltage regulation on a signal outputted by the photovoltaic module to charge the charging object.

17. The photovoltaic charging system according to claim 16, wherein the voltage conversion circuit comprises a DC-DC buck circuit.

18. The photovoltaic charging system according to claim 15, further comprising:
a battery management system;
wherein the control circuit is further configured to control, in a case that the photovoltaic module is controlled to charge the power battery pack, the battery management system to monitor a battery state of the power battery pack.

19. A vehicle-mounted terminal, comprising a memory and a processor, the memory storing a computer program, wherein the processor, when executing the computer program, implements steps of the charging control method according to any one of claims 1 to 13.

20. A vehicle, comprising the charging control apparatus according to claim 14, or the photovoltaic charging system according to any one of claims 15 to 18, or the vehicle-mounted terminal according to claim 19.
